# EUROPEAN PATENT APPLICATION

(11) **EP 2 410 699 A1**
(43) Date of publication of application: **25.01.2012**
(21) Application number: 10305800.4
(22) Date of filing: 20.07.2010
(51) Int. Cl.: H04L 12/56, H04L 29/06

(54) **A method of controlling a quality of a service in a computer network, corresponding computer program product, and data storage device therefor**

(71) Applicant: Alcatel Lucent, 75007 Paris (FR)
(72) Inventor: Roessler, Horst, 70794, Filderstadt (DE); Schefczik, Peter, 91056, Erlangen (DE); Grob-Lipski, Heidrun, 72181, Starzach (DE)
(74) Representative: Brose, Gerhard

(57) **Abstract**

The invention concerns a method of controlling a quality of a service in a computer network, the method comprising the steps of receiving (101) from a client a request for the service, wherein the client is connected to the computer network, providing (102) the service to the client by means of the computer network, and, in response to receiving a feedback signal (110) from the client by means of the computer network, improving QoS (103) of the computer network for the service. The invention further concerns a computer program product and a device therefor.

## Description

### Field of the Invention

The invention relates to a method of controlling a quality of a service in a computer network.

### Background

In the field of computer networking and other packet-switched telecommunication networks, quality of service (QoS) is the ability to provide different priority to different applications, users, or data flows, or to guarantee a certain level of performance to a data flow. Bit rate, delay, jitter, packet dropping probability, and bit error rate associated with a specific application are examples of metrics that may be managed based on QoS. QoS guarantees are of particular importance if network capacity proves to be insufficient, especially for real-time streaming multimedia applications such as voice over IP, online games, and IP-TV, these services often requiring fixed bit rate and being sensitive to delay, and in networks where capacity is a limited resource, such as in cellular data communication.

In the following, by computer network, often simply referred to as a network, is meant any collection of computers and devices connected by channels that facilitates communications among users.

In their monograph "Service Oriented Network Framework Enabling Global QoS and Network Virtualization", published in the proceedings of the 20th ITC Specialist Seminar, May 2009, Hoi An, Vietnam, the authors Daniel Schlosser and Tobias Hoßfeld disclose a service-oriented network framework to provide QoS on a global level.

A major downside of this proposed approach is the lack of control of the end user over the service quality to be achieved.

### Summary

It is an objective of the invention to present an improved approach to QoS that allows end users to exercise and retain adequate control over the experience desired or expected of a particular service.

This objective is achieved by method of controlling a quality of a service in a computer network, the method comprising the steps of receiving from a client a request for the service, wherein the client is connected to the computer network, providing the service to the client by means of the computer network, and, in response to receiving a feedback signal from the client by means of the computer network, allocating a resource of the computer network to the service. The objective further is achieved by a computer program product comprising computer-executable instructions for performing said method when the program is run on a computer, or by a device programmed or configured to perform said method.

In this context, by client is meant any application or system that accesses a remote service on another computer system, known as a server, by way of the computer network.

A main idea of the invention is to effectively implement a feedback loop wherein the feedback signal triggers the provision or upgrade of a characterizing resource of the computer network. Herein, by resource, often called system resource, is meant any physical or virtual component of limited availability within the computer network. For instance, devices attached to the network, the connections established between those devices. Other major resource types include the central processing unit (CPU) time, random access memory (RAM), virtual memory, or hard disk space of the networked devices. Further, by feedback loop is meant any causal path that leads from the initial generation of the feedback signal to the subsequent allocation of the resource.

Further developments of the invention can be gathered from the dependent claims and the following description.

In the following the invention will be explained further making reference to the attached drawing.

To control, in a computer network, a quality of a service according to an embodiment of the invention, a request for the service is received from a client connected to the said computer network. Upon reception of the request, the requested service is provided to the client by means of the computer network. Ultimately, in response to receiving a feedback signal from the client by means of the computer network, a resource, of that computer network is allocated to the service.

### Brief Description of the Figures

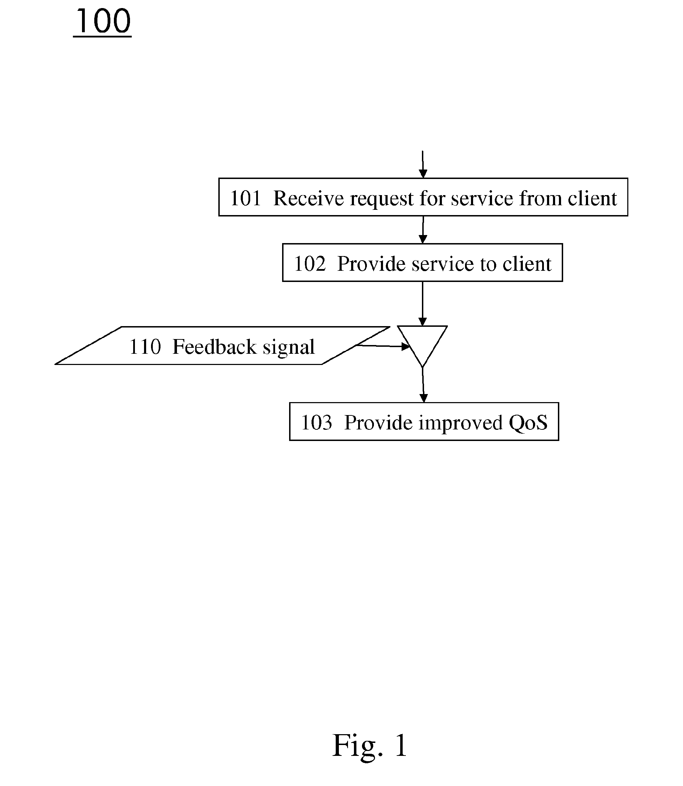

Fig. 1 shows a flowchart depicting a method according to an embodiment of the invention.

### Description of the Embodiments

In the following, a method according to the invention is elucidated by way of example, referencing Fig. 1.

The flowchart 100 of Fig. 1 comprises a first processing step 101, a second processing step 102, and a third processing step 103. A set of arrows represents the flow of control passing through the processing steps 101 and 102, merging with data 110, and finally passing into the third processing step 103. within this flow, an arrow starting at a first symbol and ending at a second symbol indicates that control passes from the first symbol to the second symbol.

In the embodiment at hand, the method is applied by means of a dedicated server. In consistence with the term's broad use in information technology, by server is meant any computerized process that provides a service to the client. More specifically, in this embodiment, the server runs on a network host that is deployed to execute such process. In this context, by network host is meant any computer connected to the computer network that hosts application software for providing network services.

In the present scenario, to allow for the interconnection between server and client without the use of wires, the computer network takes the form of a wireless network. In networking, by wireless network is meant any kind of computer network implemented with some type of remote information transmission system that uses electromagnetic waves, such as radio waves, for the carrier. In an alternative embodiment, the computer network may take the form of a wireline network.

In the first processing step 101, the server receives from the client a request for the service. To this end, the client, like the server, is connected to the computer network. In submitting the request, the client initiates a communication session with the server, which server in turn awaits, or "listens for", incoming requests for its content or service function. This type of distributed application structure is widely known in the art as the client-server model of computing.

In the second processing step 102, the server, by means of the computer network, provides to the client the service requested in the first processing step 101. In the given embodiment, the service takes the form of a video telecommunication service such as a videoconferencing, telemedicine, or video relay service (VRC). By VRC is meant a video telecommunication service that allows deaf, hard-of-hearing and speech-impaired (D-HOH-SI) individuals to communicate over video telephones and similar technologies with hearing people in real time via a sign language interpreter. This type of service puts an emphasis on streaming media, that is, multimedia that are constantly received by, and normally presented to, an end user while being delivered by a streaming provider. Herein, the term "presented" is used in a general sense that includes, inter alia, audio or video playback.

In an alternative embodiment, the service may take the form of an online gaming service. Here, by online game is meant any game suitable to be played over the computer network. To this end, the service makes use of a multimedia platform designed to add animation, video, and interactivity to Web pages, such as Adobe Flash, formerly Macromedia Flash. Like the videoconferencing service of the previous embodiment, Flash supports bidirectional streaming of audio and video between the server and client, and it can capture user input via a mouse, keyboard, microphone, or camera attached to the client. To be able to display multimedia content, the client used with this embodiment of the invention is equipped with software for viewing animations and movies, such as Windows Media Player, VLC Media Player, Adobe Flash Player or Adobe Flash Lite.

Upon delivery of the service to the client, in an intermediate step (not depicted), a user of that client is given the opportunity to evaluate a perceived quality of the service (PQoS). By PQoS, also known outside engineering as quality of experience (QoE) or quality of user experience, is meant a purely subjective measure from the user's perspective of the overall value of the service provided. In the context of telecommunications networks, PQoS is more recently also abbreviated as QoX.

In this context, PQoS should not be understood as simply the effective quality of the service but typically also takes into consideration those factors that contribute to overall user value at the services level, such factors including suitable-ness, flexibility, mobility, security, cost, personalization, and choice. The service at hand being a video service, PQoS is a particularly relevant measure as bad network performance may highly affect the user's experience, the delivered content being compressed and of low entropy. PQoS can thus conceptually be regarded as the remaining quality after the distortion introduced during the preparation of the content on the server and its delivery through the computer network until it reaches a corresponding decoder on the client.

To allow for integration with well-established web browser technology, the client provides a virtual control such as a button to obtain the user's input on PQoS. This way, the user can effectively request an upgrade in service quality by activating the control offered by the client.

To further provide for a differentiated yet manageable evaluation of PQoS for the delivered audiovisual content, the client presents to the user a range of potential choices covering the possibilities of low, medium, or high quality levels, the selected level being fed back to the server by way of the computer network.

In an alternative embodiment, instead of imposing the task of subjective evaluation of PQoS on the end user, the method makes use of objective performance metrics to derive an unbiased measure of service quality. In such embodiment, if the metrics applied indicate the presence of congestion or an overload condition within the computer network, this finding is fed back to the server by way of the computer network without the requirement for manual interaction. Among the factors considered are latency, packet loss, retransmission, and network throughput.

Within the framework of the measurements taken, what constitutes an overload depends on the nature of the service delivered to the client. For instance, in the given case of streaming video or voice, reduced reliability may be acceptable up to a certain degree, but latency is to be considered key to the avoidance of time lag during presentation. In a different scenario, a bulk file transfer or e-mail would need to be reliable and have high capacity, but does not necessarily need to be instantaneous. As yet another example, an instant messaging service requires speed and reliability whereas bandwidth is of minor importance.

Upon receipt of the feedback signal 110 from the client by means of the computer network, in the third processing step 103, the server allocates a resource of the computer network to the service of the first and second processing steps 101, 102. To quantify the envisaged improvement in service quality, the allocation is dimensioned such that a predetermined QoS characteristic may be met. In the present embodiment, assuming that the computer network is based on the TCP/IP protocol suite, the server makes use of a Transport Layer protocol designed to reserve resources across the computer network, such as the Resource Reservation Protocol (RSVP) as proposed in Request for Comments 2205 of the Internet Engineering Task Force's Network Working Group. More specifically, the server employs RSVP to request a particular QoS level for the application data stream or flow associated with the service delivered. This operation will typically result in resources being reserved in each node along the path from server to client. In communication networks, by node is meant a connection point either taking the form of a redistribution point or, as in the cases of the server and client, a communication endpoint.

To make optimal use of the information gathered, the server accumulates the feedback signal 110 with feedback received from other clients of the network. The accumulated PQoS can be stored in a database associated with the server and evaluated on demand, such as for personalization of the service offering.

To compensate for the imposed increase in infrastructure cost, the network service provider levies a service charge from the customer of the service thus improved. In this context, by network service provider (NSP) is meant any business or organization that sells bandwidth or network access by providing direct access to the computer network. In the case where the underlying computer network is the Internet, the NSP is sometimes referred to as a backbone provider or Internet provider. The NSP may take the form of, inter alia, a telecommunications company, data carrier, wireless communications provider, Internet service providers (ISP), or cable television operator offering high-speed Internet access. In the given example, the NSP also takes the role of the streaming provider.

In the present embodiment, it is assumed that the user of the client also represents the NSP's customer, thus being entitled to incur financial obligations on behalf of the latter. As a particular benefit, the invention enables the NSP to establish specifically adapted business models by leveraging the improved fee structure. For example, the NSP may want to adjust the service charge depending on the feedback received or subject to load conditions of the computer network.

To allow for an empirical evaluation of the potentially improved PQoS on the side of the user, the NSP, reserves the resource to be allocated for a predetermined trial period prior to charging its customer. Instead of imposing a particular time limit for the evaluation, to allow for increased flexibility, duration of the trial may be restricted to, inter alia, the delivery of a specific content object from the server to the client or a single communication session between server and client.

As an additional benefit, the PQoS evaluation and feedback signal 110 puts the NSP in a position to minimize the engagement of storage and network resources by allocating only those resources sufficient to maintain a predetermined level of user satisfaction. In the given embodiment, as for the placement of the reservation, the server makes use of RSVP to relinquish the reserved resources once the need for them has ended.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawing merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor (s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling a quality of a service in a computer network, the method comprising the steps of
receiving (101) from a client a request for the service, wherein the client is connected to the computer network, and
providing (102) the service to the client by means of the computer network,
**characterized in that** the method comprises the further step of,
in response to receiving a feedback signal (110) from the client by means of the computer network, providing (103) improved QoS.

2. A method according to claim 1, **characterized in that** the method comprises the further steps of
evaluating a perceived quality of the service on the client and
generating the feedback signal based on the perceived quality of the service.

3. A method according to claim 1, **characterized in that** the method comprises the further steps of
monitoring the computer network and
generating the feedback signal in response to detecting an overload condition.

4. A method according to any of the preceding claims, **characterized in that** the method comprises the further step of
in response to receiving the feedback signal, levying a service charge from a customer of the service.

5. A method according to claim 4, **characterized in that**, prior to levying the service charge, the method comprises the preliminary step of
improving QoS for the service for a trial period.

6. A method according to any of the preceding claims, **characterized in that** the service comprises a delivery of streaming media to the client over the computer network.

7. A method according to claim 6, **characterized in that** the service is either of the following:
a video telecommunication service and
an online gaming service.

8. A method according to any of the preceding claims, **characterized in that** the QoS is improved for the service such that at least one of the following is achieved:
a minimum bit rate,
a maximum delay,
a maximum delay variation,
a maximum packet dropping probability, and
a maximum bit error rate.

9. A computer program product comprising computer-executable instructions for performing a method when the program is run on a computer, the method comprising the steps of
receiving (101) from a client a request for a service, wherein the client is connected to a computer network, and
providing (102) the service to the client by means of the computer network,
**characterized in that** the method comprises the further step of,
in response to receiving a feedback signal (110) from the client by means of the computer network, improving QoS (103) of the computer network for the service.

10. A device programmed or configured to perform a method comprising the steps of
receiving (101) from a client a request for a service, wherein the client is connected to a computer network, and
providing (102) the service to the client by means of the computer network,
**characterized in that** the method comprises the further step of,
in response to receiving a feedback signal (110) from the client by means of the computer network, improving QoS (103) of the computer network for the service.
